(19) Europäisches Patentamt
European Patent Office
Office européen des brevets

(11) **EP 2 624 972 B1**

(12) **EUROPÄISCHE PATENTSCHRIFT**

(45) Veröffentlichungstag und Bekanntmachung des Hinweises auf die Patenterteilung:
**07.01.2015  Patentblatt 2015/02**

(21) Anmeldenummer: **11752230.0**

(22) Anmeldetag: **05.09.2011**

(51) Int Cl.:
*B21B 28/00* (2006.01)   *B21B 31/07* (2006.01)
*B21B 31/08* (2006.01)   *F16C 13/02* (2006.01)

(86) Internationale Anmeldenummer:
**PCT/EP2011/065313**

(87) Internationale Veröffentlichungsnummer:
**WO 2012/045538 (12.04.2012 Gazette 2012/15)**

(54) **VERFAHREN ZUM AUFBEREITEN EINER LAGERANORDNUNG UND LAGERANORDNUNG**

METHOD FOR PREPARING A BEARING ARRANGEMENT, AND BEARING ARRANGEMENT

PROCÉDÉ DE TRAITEMENT D'UN ENSEMBLE PALIER ET ENSEMBLE PALIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2010  DE 102010047471**

(43) Veröffentlichungstag der Anmeldung:
**14.08.2013  Patentblatt 2013/33**

(73) Patentinhaber: **SMS Siemag AG**
**40237 Düsseldorf (DE)**

(72) Erfinder:
• **KELLER, Karl**
**57271 Hilchenbach (DE)**
• **ROEINGH, Konrad**
**57271 Hilchenbach (DE)**

(74) Vertreter: **Klüppel, Walter et al**
**Hemmerich & Kollegen**
**Patentanwälte**
**Hammerstraße 2**
**57072 Siegen (DE)**

(56) Entgegenhaltungen:
**WO-A1-2009/087114     DE-C- 872 481**
**JP-A- 57 083 351**

• **SCHRAMA R C: "TYPES OF FAILURES OF BACKUP ROLL ASSEMBLIES", IRON & STEEL TECHNOLOGY, AIST, WARRENDALE, PA, US, Bd. 2, Nr. 12, 1. Dezember 2005 (2005-12-01), Seiten 39-56, XP001242216, ISSN: 1547-0423 in der Anmeldung erwähnt**

**Beschreibung**

Die Erfindung betrifft eine Lageranordnung und ein Verfahren zum Aufbereiten einer Lageranordnung für einen Walzenzapfen einer Walze zum Walzen von metallischem Walzgut, wie beispielsweise Brammen oder Metallbänder. Die Lageranordnung umfasst ein Lagereinbaustück mit einer Lagerbuchse und eine in der Lagerbuchse mit Lagerspiel gelagerte, auf den Walzenzapfen aufschiebbare Zapfenbuchse. Die Erfindung betrifft insbesondere Lageranordnungen für Arbeits- oder Stützwalzen in Walzwerken der Hüttenindustrie.

Derartige Lageranordnungen sowie Verfahren für deren Aufbereitung sind im Stand der Technik grundsätzlich bekannt, siehe z.B. R.S. Schrama in "Iron & Steel Technologies", December 2005 "Types of Failures of Backup Roll Assemblies".

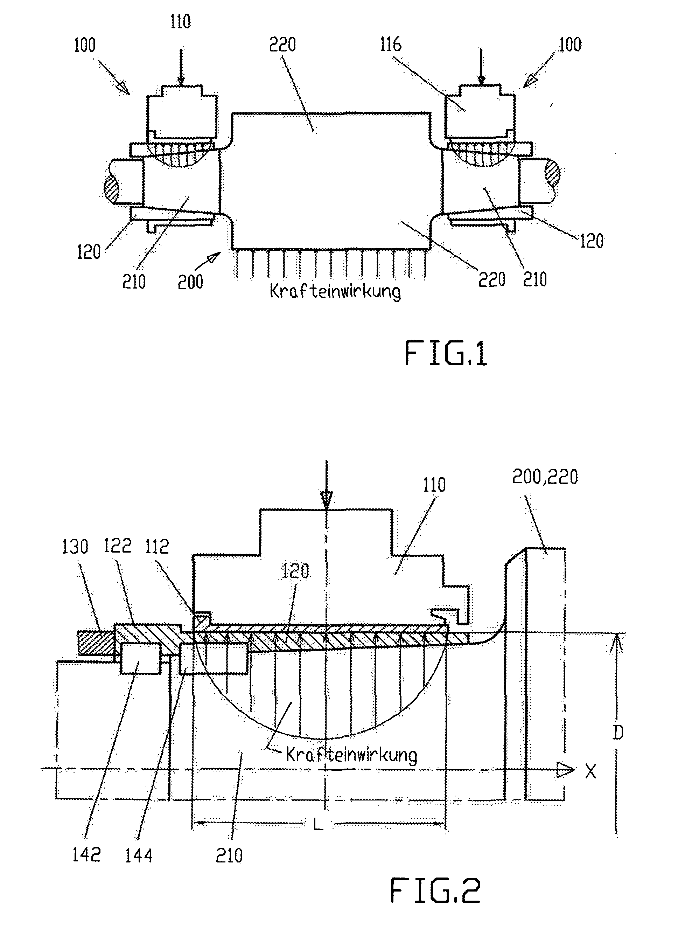

Eine bekannte Lageranordnung sowie ein bekanntes Verfahren für deren Aufbereitung werden nachfolgend unter Bezugnahme auf die Figuren 1 bis 4 näher erläutert:

Figur 1 zeigt die bekannte Lageranordnung 100 zum Lagern einer Walze 200. Die Walze umfasst einen Walzenkörper 220 sowie zwei Walzenzapfen 210. Jeder der Walzenzapfen 210 ist jeweils in einer separaten Lageranordnung 100 gelagert. Jede der Lageranordnungen umfasst ein Lagergehäuse, auch Lagereinbaustück genannt, 110.

Figur 2 zeigt den detaillierten Aufbau der Lageranordnung. Demnach umfasst das Lagereinbaustück 110 eine in dem Einbaustück angeordnete ringförmige Lagerbuchse 112 zur Aufnahme des Walzenzapfens 210. Die Lageranordnung 100 umfasst neben dem Lagereinbaustück eine auf den Walzenzapfen 210 aufschiebbare ringförmige Zapfenbuchse 120. Um ein Durchdrehen des Walzenzapfens 210 innerhalb der Zapfenbuchse 120 zu verhindern, sind zwischen der Zapfenbuchse 120 und dem Walzenzapfen Passfedern 142, 144 vorgesehen. Ein axiales Abrutschen der Zapfenbuchse von dem Walzenzapfen während des Walzbetriebes wird durch einen vorgeschraubten Druckschulterring 130 verhindert. Die Zapfenbuchse 120 weist an ihrem dem Walzenkörper fernen Ende eine radiale Erhebung in Form eines Bundes 122 auf. Dieser ringförmige Bund weist eine gewisse koaxiale Erstreckung auf, um Kräfte aufzunehmen, wie sie beispielsweise beim Abziehen der Zapfenbuchse 120 von dem Walzenzapfen auftreten. Dazu wird das Einbaustück mitsamt der Lagerbuchse 112 in axialer Richtung von dem Walzenkörper 220 weg abgezogen, wobei das Einbaustück bzw. die Lagerbuchse dann an dem Bund 122 angreifen und auf diese Weise die Zapfenbuchse in axialer Richtung von dem Walzenzapfen 210 in axialer Richtung, das heißt in Richtung der Längsachse der Walze 200, mit abziehen.

Weiterhin ist in Figur 2 die Kraftverteilung mit Hilfe von Pfeilen dargestellt, wie sie während des Walzbetriebes auf die Lageranordnung einwirkt.

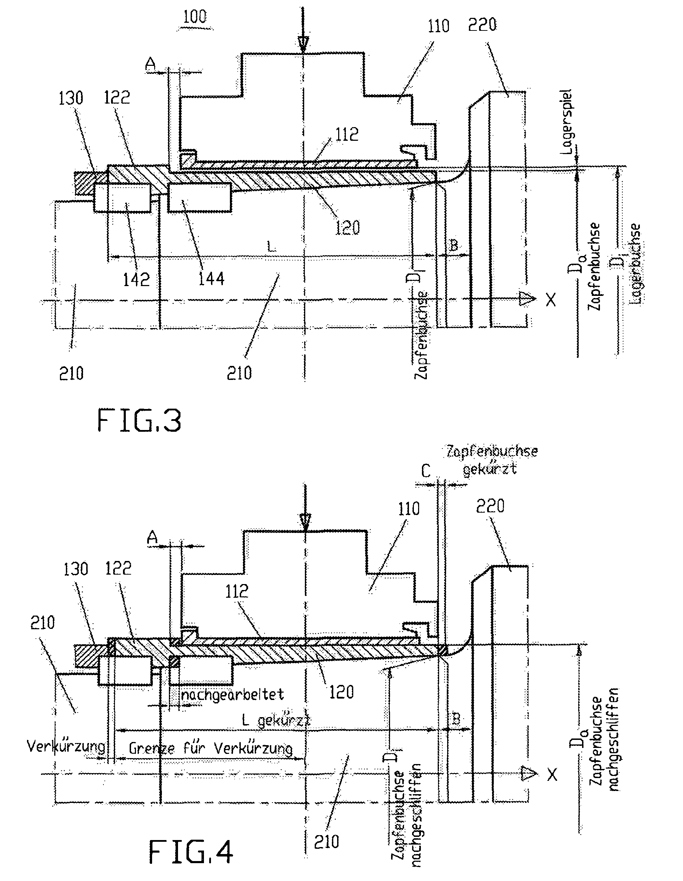

Figur 3 zeigt eine weiter detaillierte Ansicht der Lageranordnung und zwar in einem Ursprungs- bzw. Neuzustand. Zu erkennen ist in Figur 3 ein Lagerspiel zwischen dem Außendurchmesser $D_a$ der Zapfenbuchse und dem Innendurchmesser $D_i$ der Lagerbuchse. Im Neuzustand liegt dieses Lagerspiel je nach Bauart der Lageranordnung in einem zulässigen Wertebereich von 0,5 bis 1,5 pro ‰ des ursprünglichen Außendurchmessers der Zapfenbuchse.

Während des rauen Walz-Betriebs unterliegen die Lageranordnungen starken mechanischen und thermischen Belastungen und verschleißen in Folge dessen. Konkret zeigen sich die Verschleißerscheinungen in Form von Riefen oder Beschädigungen der Oberflächen auf der Innenseite der Lagerbuchse und auf der Außen- und Innenseite der Zapfenbuchse. Reparaturen derartiger Lageranordnungen sind übliche Praxis. Traditionell erfolgt sowohl eine Reparatur der Zapfenbuchse wie auch eine Reparatur der Lagerbuchse.

Dabei umfasst die Reparatur der Zapfenbuchse 120 traditionell folgende Schritte: Nachbearbeiten der Außenseite der Zapfenbuchse 120 durch abdrehen, abfräsen oder abschleifen, wobei der Außendurchmesser der Zapfenbuchse 120 soweit verringert wird, dass die vorhandenen Riefen oder Beschädigungen nicht mehr vorhanden sind. Auf analoge Weise kann auch die Innenseite der Zapfenbuchse nachgearbeitet werden, wobei sich der Innendurchmesser dann vergrößert. Die Vergrößerung des Innendurchmessers der Zapfenbuchse hat jedoch den Nachteil, dass bei einer späteren Wiederverwendung der Zapfenbuchse diese weiter als ursprünglich auf den Walzenzapfen aufschiebbar ist. Dies hat den Nachteil, dass eine zwischen dem Walzenkörper und dem Einbaustück vorhandene, in Figur 4 nicht gezeigte Dichtung, in unzulässiger Weise eingequetscht werden würde. Es ist deshalb erforderlich, die Zapfenbuchse an ihrer dem Walzenkörper 220 zugewandten Stirnseite um einen Betrag C zu kürzen, so dass die Zapfenbuchse 120 nicht weiter als im Neuzustand auf den Walzenzapfen aufgeschoben werden kann.

Auf der dem Walzenkörper 220 abgewandten Seite der Zapfenbuchse 120 hat die Verringerung des Innendurchmessers der Zapfenbuchse den Nachteil, dass der Bund 122 der Zapfenbuchse 120 zu nahe an die Lagerbuchse 112 heranragt. Zwischen dem Bund 122 und der Lagerbuchse 112 ist ein gewisser Mindestabstand A einzuhalten. Um diesen Abstand A einzuhalten, ist bei einer erfolgten Vergrößerung des Innendurchmessers der Zapfenbuchse der Bund 122 entsprechend nachzuarbeiten, das heißt in seiner koaxialen Erstreckung so weit zu reduzieren, dass der Mindestabstand A wieder hergestellt wird. Allerdings darf dabei die axiale Erstreckung des Bundes 122 ihrerseits ein gewisses Mindestmaß nicht unterschreiten, um die erforderliche Stabilität des Bundes für das besagte Abziehen der Zapfenbuchse vom Walzenzapfen nach wie vor zu gewährleisten.

In weiterer Konsequenz hat die Vergrößerung des Innendurchmessers der Zapfenbuchse den Nachteil, dass die dem Walzenkörper 220 abgewandte Stirnseite der Zapfenbuchse beim Aufschieben der Zapfenbuchse auf den Walzenzapfen ein Stück weit entfernt von dem Druckschulterring 130 liegt, so dass der Druckschulterring entsprechend nachgeschoben werden muss.

Die Herstellung einer Lagerbuchse mit einer Beschichtung aus Lagermetall, vorzugsweise Weißmetall, ist aus dem Stand der Technik, z.B. aus der EP 1 151 145 B1 bekannt.

Eine Reparatur der Lagerbuchse umfasst typischerweise folgende Schritte:

Abtragen einer der Zapfenbuchse zugewandten Lagermetallschicht, z.B. Weißmetallschicht, zum Entfernen der darin enthaltenen Riefen und Beschädigungen. Diese Weißmetallschicht ist im Neuzustand der Lagerbuchse typischerweise vergleichsweise dünn, so dass sie nur komplett abgetragen werden kann. In der Regel wird beim Abtragen der Weißmetallschicht nachteiligerweise auch eine dünne Schicht des der Zapfenbuchse abgewandten Trägermaterials, typischerweise Stahl, aus dem die Lagerbuchse hauptsächlich besteht, mit abgetragen, wodurch die Lagerbuchse bei jeder Reparatur ein stück weit mehr geschwächt wird. Nach dem Abtragen der Weißmetallschicht erfolgt ein Neuaufbau einer neuen Weißmetallschicht auf der Innenseite der Lagerbuchse 112 wieder auf den alten/bisherigen vorgegebenen Nenn-Innendurchmesser $D_{i\,alt}$ ; diesmal jedoch mit einer größeren Lagermetall-Schichtdicke als bei der alten abgetragenen Materialschicht. Die größere Schichtdicke der neuen Weißmetallschicht begründet sich mit dem abgetragenen Trägermaterial. Weil - wie gesagt - der Innendurchmesser $_{Di\,alt}$ der Lagerbuchse auch nach dem Neuaufbau der Lagermetallschicht zum Zwecke der Austauschbarkeit unverändert bleibt, insbesondere jedenfalls nicht kleiner wird, gleichzeitig aber der Außendurchmesser $D_a$ der Zapfenbuchse durch die Abtragung verringert wurde, vergrößert sich das Lagerspiel mit jedem Abtrag an der Außenseite der Zapfenbuchse. Das Lagerspiel zwischen der Weißmetallschicht und der Außenseite der Zapfenbuchse darf allerdings aufgrund der mindestens einen Nachbearbeitung nicht größer als 1,7 ‰ des ursprünglichen Außendurchmessers der Zapfenbuchse werden. Sobald dieser maximal zulässige Wert von 1,7 ‰ für das Lagerspiel erreicht ist oder der Innendurchmesser der Zapfenbuchse einen vorgegebenen Grenzwert überschreitet, durfte die Zapfenbuchse traditionell nicht noch einmal repariert, sondern musste ausgetauscht werden.

Traditionell wird deshalb nach zwei bis dreimaliger Reparatur die Zapfenbuchse ausgetauscht, was regelmäßig mit hohen Kosten für den Betreiber und einem hohen Verbrauch an Ressourcen verbunden ist, weil die Zapfenbuchse dann typischerweise verschrottet werden muss.

Für die Dicke der Lagermetallschicht, insbesondere der Weißmetallschicht in der Lagerbuchse gibt es einen Dicken-Schwellenwert $S_D$, welcher nicht überschritten werden darf. Dies gilt deshalb, weil das Weißmetall wesentlich weicher ist als zum Beispiel das Trägermaterial der Lagerbuchse, auf welchem die Weißmetallschicht aufgetragen ist. Die Weißmetallschicht kann nur soweit erhöht werden, dass die vorgegebenen Lastanforderungen der Lageranordnung, noch erfüllt werden können und gleichzeitig der vorgegebene Nenn-Innendurchmesser beibehalten wird.

Aus diesem Grund gilt für die Lagerbuchse, dass eine derartige Reparatur nicht beliebig oft, sondern in der Regel höchstens zwei bis dreimal durchgeführt werden kann.

Ausgehend von diesem Stand der Technik liegt der Erfindung die Aufgabe zugrunde, ein Verfahren zum Aufbereiten einer Lageranordnung bereit zustellen, welches eine längere Nutzung von zumindest der hochwertigen, sprich teuren Zapfenbuchse ermöglicht.

Diese Aufgabe wird durch das in dem Patentanspruch 1 beanspruchte Verfahren gelöst. Dieses Verfahren ist durch die beiden folgenden Schritte gekennzeichnet:

- Nacharbeiten der Zapfenbuchse durch erstmaliges Verringern von deren Außendurchmesser $D_a$ unterhalb eines Schwellenwertes $D_{ak}$, bei dessen Unterschreitung das Lagerspiel, welches dann zwischen dem Innendurchmesser $D_{i\,alt}$ der bisherigen Lagerbuchse und dem unter den Schwellenwert verringerten Außendurchmesser der Zapfenbuchse verbleibend würde, nicht mehr in einem zulässigen Wertebereich liegen würde, und

- Bereitstellen einer neuen Lagerbuchse, welche mit ihrem Innendurchmesser $D_{i\,neu}$ derart an den verringerten Außendurchmesser der nachgearbeiteten Zapfenbuchse angepasst ist, dass das Lagerspiel zwischen dem Innendurchmesser $D_{i\,neu}$ der neuen Lagerbuchse und dem unter den Schwellenwert $D_{ak}$ verringerten Außendurchmesser der nachgearbeiteten Zapfenbuchse einen Wert in dem vorgegebenen zulässigen Wertebereich aufweist.

Dieses beanspruchte Verfahren bietet den Vorteil, dass die hochwertige Zapfenbuchse, welche wesentlich teurer als die Lagerbuchse ist, noch mindestens einmal, typischerweise jedoch noch mehrmals repariert und wieder verwendet werden kann. Dadurch entstehen für den Betreiber deutliche Kosteneinsparungen und für die Umwelt erfolgt eine deutliche Schonung der Ressourcen gegenüber einer traditionell üblichen Verschrottung der Zapfenbuchse. Die Wiederverwendung der Zapfenbuchse wird ermöglicht durch die Bereitstellung der neuen Lagerbuchse, welche bezüglich ihres Innendurchmessers $D_{i\ neu}$ so ausgebildet ist, dass das Lagerspiel in einem zulässigen Wertebereich liegt. Das heißt, der Nenn-Innendurchmesser $D_{i\ neu}$ der neuen Lagerbuchse ist regelmäßig etwas kleiner als der Nenn-Innendurchmesser $D_{i\ alt}$ der bisherigen Lagerbuchse, um bei dem weiter verringerten Außendurchmesser der Zapfenbuchse das Lagerspiel in dem zulässigen Wertebereich zu halten.

Das so erfindungsgemäß gebildete Pärchen, bestehend aus nachgearbeiteter Zapfenbuchse mit unterhalb des Schwellenwertes $D_{ak}$ verringertem Außendurchmesser und neuer Lagerbuchse startet einen neuen Lebenszyklus für die Lageranordnung mit einem zulässigen Lagerspiel. Der Lebenszyklus ermöglicht typischerweise wiederum ein mehrfaches Reparieren von sowohl der Zapfenbuchse wie auch der neuen Lagerbuchse. Insgesamt kann auf diese Weise insbesondere die Nutzungsdauer für die Zapfenbuchse in etwa verdoppelt werden.

Der Schwellenwert $D_{ak}$ ist definiert zu:

$$D_{ak} = D_{a\ ursprünglich}\ (1-0{,}0007);$$

mit

$D_{a\ urspürnligch}$: ursprünglicher Außendurchmesser der Zapfenbuchse vor erstmaliger Benutzung.

Gemäß einem ersten Ausführungsbeispiel wird die neue Lagerbuchse mit ihrem Innendurchmesser so ausgebildet, dass das anfängliche Lagerspiel des Pärchens neue Lagerbuchse / Zapfenbuchse mit $D_{a\ neu}$ ($D_{a\ neu}$ = Außendurchmesser der Zapfenbuchse bei erstmaliger Verringerung unter $D_{ak}$) dem zulässigen Wert des Lagerspiels im ursprünglichen Neuzustand der Lageranordnung (bisherige Lagerbuchse im Neuzustand / Zapfenbuchse im Neuzustand) entspricht. Die Lagermetallschicht der neuen Lagerbuchse kann dann bei entsprechend dicker gestaltetem Stahlträger noch besonders dünn gehalten werden.

Der zulässige Ausgangswert für das Lagerspiel liegt in einem Wertebereich von 0,3 bis 1,5 ‰ des ursprünglichen Nenn-Außendurchmessers der Zapfenbuchse im Neuzustand, je nach Anwendsungsfall. Dieser Wertebereich für das Lagerspiel gilt sowohl für das Pärchen bisherige Lagerbuchse / Zapfenbuchse, jeweils im Neuzustand, wie auch für das Pärchen, neue Lagerbuchse / Zapfenbuchse mit $D_a$ erstmalig kleiner als $D_{ak}$. Eine durch spätere Reparaturen, insbesondere durch eine Verringerung des Außendurchmessers der Zapfenbuchse bedingte Vergrößerung des Lagerspiels auf das 1,7 fache des ursprünglichen Ausgangswertes des Lagerspiels im jeweiligen Anwendungsfall wäre noch zulässig. Eine Vergrößerung des Lagerspiels über das 1.7fache hinaus oder - was bei im Wesentlichen unverändertem Innendurchmesser der neuen Lagerbuchse gleichbedeutend wäre - eine weitere Verringerung des Außendurchmessers $D_a$ der Zapfenbuchse unter einen zweiten Schwellenwert $D_{ak2} = D_{a\ neu}\ (1-0{,}007)$ wäre nicht mehr zulässig.

Vorteilhafterweise wird die neue Lagerbuchse mit einem Stahlträgerring hergestellt, welcher dicker ist als der Stahlträgerring bei der bisherigen mindestens einmal reparierten Lagerbuchse.

Wie gesagt, die Lagermetallschicht kann bei der neuen Lagerbuchse mit leicht verdicktem Stahlträgerring vorteilhafterweise eine nur minimale Dicke aufweisen, welche vergleichbar ist mit der Dicke der Lagermetallschicht der bisherigen Lagerbuchse im Neuzustand bei gegebenem Nenn-Innendurchmesser $D_{i\ alt}$. Insbesondere kann die Lagermetallschicht in der neuen Lagerbuchse deutlich dünner sein, als die Lagermetallschichtdicke in der bisherigen Lagerbuchse nach mehrmaliger Reparatur.

Die Nacharbeitung der Zapfenbuchse umfasst typischerweise die oben mit Bezugnahme auf Figur 4 bereits beschriebenen Schritte. Diese Nacharbeitung der Zapfenbuchse kann auch bereits vor Durchführung des erfindungsgemäßen Verfahrens, dass heißt vor dem erstmaligen Verringern des Außendurchmessers der Zapfenbuchse auf einen Wert unterhalb des Schwellenwertes, ein- oder mehrfach stattgefunden haben. Dabei erfolgte eine Reduzierung des Außendurchmessers der Zapfenbuchse jedoch immer nur sukzessive, aber niemals soweit, dass der Schwellenwert $D_{ak}$ unterschritten wurde. Der kritische Schwellenwert $D_{ak}$ ist so definiert, dass bei dessen Unterschreitung das Lagerspiel, welches dann zwischen dem Innendurchmesser der bisherigen Lagerbuchse und dem unter den Schwellenwert $D_{ak}$ verringerten Außendurchmessers der Zapfenbuchse verbleiben würde, außerhalb eines zulässigen Wertebereichs liegen würde, insbesondere einen vorgegebenen zulässigen Maximalwert überschreiten würde.

Bei dem erfindungsgemäßen Verfahren kann vorteilhafterweise vorgesehen sein, dass die Zapfenbuchse an ihrer ballenfernen, das heißt dem Walzenkörper abgewandten Stirnseite in axialer Richtung verlängert wird, z.B. durch Einschrumpfen eines Ringes in die ballenferne Stirnseite. Diese axiale Verlängerung ermöglicht vorteilhaftersweise einen Form- oder Kraftschluss zwischen dieser Stirnseite und dem Druckschulterring, auch bei vergrößertem Innendurchmesser der Zapfenbuchse. Der Ring ist vorzugsweise austauschbar montiert.

Vorteilhafterweise kann die besagte Nacharbeitung der Zapfenbuchse auch nach dem erstmaligen Verringern des Außendurchmessers auf einen Wert unterhalb des alten Schwellenwertes noch mindestens einmal, typischerweise jedoch bis zu dreimal erfolgen ohne den neuen Schwellenwert zu unterschreiten.

Vorteilhafterweise kann die neue Lagerbuchse mehrfach repariert und wieder verwendet werden. Die Reparatur der bisherigen Lagerbuchse und die Reparatur der neuen Lagerbuchse erfolgen typischerweise nach dem gleichen Schema, welche die oben unter Bezugnahme auf Figur 4 beschriebenen Schritte umfasst:

Abtragen der der Zapfenbuchse zugewandten Lagermetallschicht, typischerweise Weißmetall, auf der Innenseite der Lagerbuchse, optional zusammen mit einer dünnen Schicht des der Zapfenbuchse abgewandten Trägermaterials der Lagermetallschicht bzw. der Weißmetallschicht; und

Neuaufbau einer neuen Lagermetallschicht mit einer typischerweise größeren Schichtdicke als bei der abgetragenen Materialschicht auf der Innenseite der Lagerbuchse so, dass der ursprüngliche Innendurchmesser $D_{i\ neu}$ der neuen Lagerbuchse wieder hergestellt wird; die so reparierte Lagerbuchse bleibt damit austauschbar.

Vorteilhafterweise liegt die Schichtdecke der neu aufgebauten Lagermetallschicht immer unterhalb eines Dickenschwellenwertes $S_D$. Dies ist wichtig, weil das neu aufgebaute Material, vorzugsweise Weißmetall, relativ weich ist und deshalb nur begrenzten Lastanforderungen Stand hält. Eine zu große Dicke der Materialschicht oberhalb des Dickenschwellenwertes würde den für die Lageranordnung geforderten Lastanforderungen nicht mehr genügen.

Schließlich sei erwähnt, dass das Nacharbeiten, das Verringern des Außendurchmessers, das Vergrößern des Innendurchmessers oder das Abtragen von Material z.B. durch Abschleifen, Abfräsen oder Abdrehen erfolgt.

Der Beschreibung sind insgesamt 6 Figuren beigefügt, wobei

Figur 1     eine Lageranordnung mit Walze gemäß dem Stand der Technik;

Figur 2     eine erste Detailansicht der Lageranordnung gemäß dem Stand der Technik;

Figur 3     eine zweite Detailansicht der Lageranordnung gemäß dem Stand der Technik;

Figur 4     die Veränderungen an der Lageranordnung aufgrund der Durchführung einer Reparatur gemäß dem Stand der Technik;

Figur 5     die Lageranordnung nach Durchführung des erfindungsgemäßen Verfahrens; und

Figur 6     eine Detailansicht von Figur 5

zeigt.

In allen Figuren sind gleiche technische Merkmale mit gleichen Bezugzeichen bezeichnet.

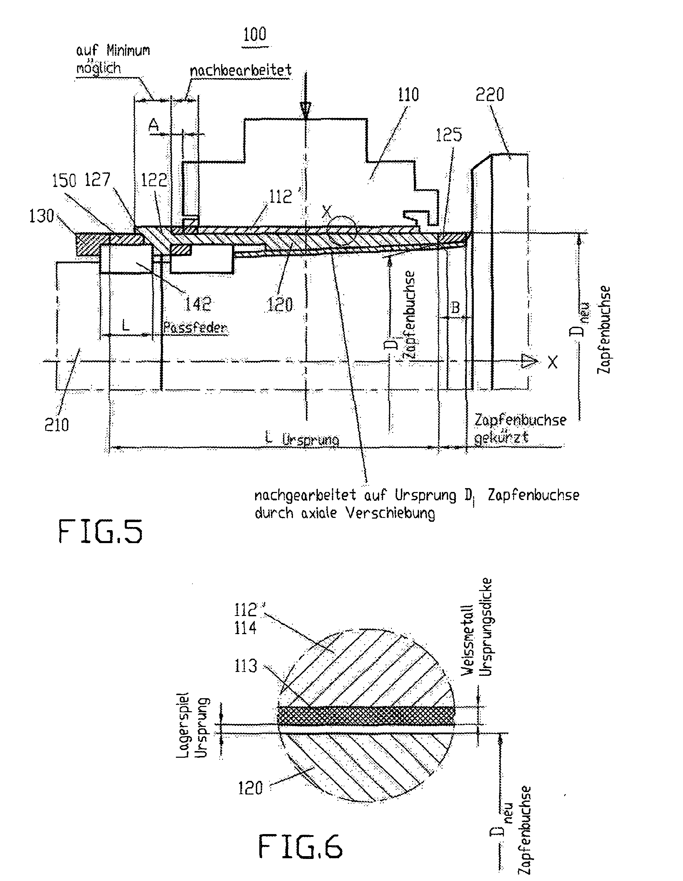

Die Erfindung wird nachfolgend unter Bezugnahme auf die Figuren 5 und 6 näher beschrieben.

Figur 5 zeigt die Lageranordnung 100 nach Durchführung des erfindungsgemäßen Verfahrens, dass heißt mit neuer Lagerbuchse 112', und nachgearbeiteter Zapfenbuchse 120.

Das erfindungsgemäße Verfahren dient dazu, einer gebrauchten und typischerweise bereits mehrfach reparierten Lageranordnung, insbesondere Zapfenbuchse, ein neues zweites Leben zu ermöglichen. Das erfindungsgemäße Verfahren setzt deshalb an, bei einer verschliessenen Lageranordnung, bei welcher der Außendurchmesser der Zapfenbuchse 120 aufgrund vorangegangener Nachbearbeitungen bereits deutlich genüber dem Neuzustand reduziert ist. Das Lagerspiel zwischen dem Innendurchmesser der Lagermetallschicht, dass heißt näherungsweise dem Innendurchmesser der Lagerbuchse, und dem reduzierten Außendurchmesser der Zapfenbuchse 120 liegt vor Durchführung des erfindungsgemäßen Verfahrens, das heißt nach Durchführung der letzten Nacharbeitung, typischerweise, jedoch nicht zwingend notwendig, noch in einem zulässigen Wertebereich; das heißt, das Lagerspiel ist noch nicht größer das 1,7 fache des ursprünglichen Wertes des Lagerspiels im jeweiligen Anwendungsfall.

Ein weiterer Abtrag der Zapfenbuchse im Rahmen einer weiteren Aufarbeitung/Reparatur - unter Beibehaltung des bisherigen Nenn-Innendurchmessers $D_{i\ alt}$ der bisherigen Lagerbuchse - würde jedoch zwangsläufig zu einem unzulässig großen Lagerspiel führen. Die Zapfenbuchse kann jedoch bei dieser Sachlage noch mindestens einmal, typischerweise jedoch noch bis zu dreimal repariert werden.

Deshalb sieht das erfindungsgemäße Verfahren zunächst vor, die Zapfenbuchse noch einmal nachzuarbeiten, dass heißt, Riefen oder Beschädigungen in/auf deren Oberflächen durch Materialabtrag zu beseitigen. Dabei wird der Außendurchmesser der Zapfenbuchse nun erstmals unter den besagten Außendurchmesser-Schwellenwert $D_{ak}$ verringert.

Zusätzlich wird, wie in Figur 5 gezeigt, eine neue Lagerbuchse 112' vorgesehen, welche bezüglich ihres Innendurchmessers inklusive einer Lagermetallschicht so ausgebildet ist, dass das Lagerspiel auf ein für die jeweilige Anwendung optionale Maß innerhalb des zulässigen Wertebereiches verringert wird. Für die neue Lagerbuchse 112' wird ein neuer Nenn-Innendurchmesser $D_{i\ neu}$ definiert, mit $D_{i\ neu} < D_{i\ alt}$. $D_{i\ neu}$ wird so gewählt, dass das neue Lagerspiel, trotz des weiteren Abtrags des Außendurchmessers der Zapfenbuchse, im zulässigen Wertebereich von 0,3 - 1,5 ‰ des erstmalig unter $D_{ak}$ verringerten Außendurchmessers $D_{a\ neu}$ der Zapfenbuchse liegt. Das äußere Trägermaterial 114, z.B. Stahl, ist bei der neuen Lagerbuchse 112' vorzugsweise etwas dicker ausgebildet als bei der bisherigen Lagerbuchse.

Der Schwellenwert $D_{ak}$ für den Aussendurchmesser der Zapfenbuchse ist definiert zu: $D_{ak} = D_{a\ ursprünglich} (1-0,0007)$, wobei $D_{a\ ursprünglich}$ der Nenn-Aussendurchmesser der Zapfenbuchse im Neuzustand vor deren erster Benutzung ist.

Die Lagermetallschicht ist dabei jedoch, wie in Figur 6 dargestellt, auf eine notwendige Mindest-Schichtdicke beschränkt, wie dies beispielsweise auch beim Neuzustand der bisherigen verwendeten Lagerbuchse der Fall war. Diese Schichtdicke des Lagermetalls bei der neuen Lagerbuchse ist jedenfalls deutlich geringer als der vorgegebene Dicken-Schwellenwert; vorzugsweise sogar so dünn, dass später noch eine mehrfache Reparatur der Lagerbuchse möglich ist, wobei jeweils, wie gesagt, eine sukzessive Vergrößerung der Dicke erfolgen kann, ohne dass die Dicke der Lagermetallschicht den Dicken-Schwellenwert überschreitet.

Sofern erforderlich, kann die Nachbearbeitung der Zapfenbuchse gemäß dem vorliegenden Verfahren auch noch folgende weitere Schritte umfassen: Nacharbeiten der Zapfenbuchse auf ihrer Innenseite wobei der Innendurchmesser der Zapfenbuchse vergrößert wird; kürzen der Zapfenbuchse an ihrer ballenseitigen Stirnseite 125 in ihrer axialen Länge, so, dass beim Aufschieben der Zapfenbuchse mit vergrößertem Innendurchmesser auf den Walzenzapfen eine zwischen Lageranordnung und Ballen der Walze befindliche Dichtung nicht übermäßig eingedrückt wird. Weiterhin kann ein radial nach außen stehender Bund 122 an den ballenfernen Ende der Zapfenbuchse 120 auf der der Lagerbuchse zugewandten Stirnseite des Bundes in seiner axialen Erstreckung reduziert werden, um einen erforderlichen Mindestabstand A zur ballenfernen Stirnseite der Lagerbuchse zu gewährleisten. Außerdem kann es erforderlich sein, bei der Zapfenbuchse 120 auch einen Materialabtrag im Bereich der Passfedern 142, 144 vorzusehen, damit diese nach wie vor eingebaut werden können. Jedenfalls müssen die Passfedern 142, 144 zwischen Druckschulterring 130 und Zapfenbuchse 120 noch ausreichend Überdeckung bieten.

Sämtliche soeben erwähnten Material-Abtragungen am Innendurchmesser der Zapfenbuchse, an deren ballenseitiger Stirnseite, an dem Bund 122 sowie im Bereich der Passfedern sind in Figur 5 schraffiert dargestellt.

Schließlich sieht das erfindungsgemäße Verfahren vor, dass die Zapfenbuchse bei notwendigem Abtrag an ihrer dem Walzenballen zugewandten Stirnseite 125 wieder auf ihre ursprüngliche Länge $L_{Ursprung}$ verlängert wird, um ein ordnungsgemäßes Anliegen des Druckschulterringes 130 zu gewährleisten. Zu diesem Zweck wird an der ballenfernen Stirnseite 127 der Zapfenbuchse 120 ein umlaufender Ring mit einer erforderlichen Dicke angebracht, z.B. eingeschrumpft. Der Ring 150 ist vorzugsweise mit einem Rechteckprofil ausgebildet, um dem Vorhandensein der Passfeder 142 Rechnung zu tragen.

Bezugszeichenliste

| | |
|---|---|
| 100 | Lageranordnung |
| 110 | Lagereinbaustück |
| 112 | bisherige Lagerbuchse |
| 112' | neue Lagerbuchse |
| 113 | Lagermetallschicht |
| 114 | Trägermaterial |
| 120 | Zapfenbuchse |
| 122 | Bund der Zapfenbuchse |
| 130 | Druckschulterring |
| 142 | erste Passfeder |
| 144 | zweite Passfeder |
| 150 | Ring |
| 200 | Walze |
| 210 | Walzenzapfen |
| 220 | Walzenkörper (= Walzenballen) |

| | |
|---|---|
| $D_{a\ ursprünglich}$ | Außendurchmesser der Zapfenbuchse im ursprünglichen Neustand vor der ersten Benutzung |
| $D_a$ | jeweils aktueller Außendurchmesser der Zapfenbuchse |
| $D_{a\ neu}$ | Außendurchmesser der Zapfenbuchse bei erstmaliger Verringerung unter $D_{ak}$, das heißt zu Beginn des 2. Lebens für die Zapfenbuchse |
| $D_{ak}$ | kritischer Schwellenwert für den Außendurchmesser der Zapfenbuchse |
| $D_{ak2}$ | zweiter kritischer Schwellenwert für den Außendurchmesser der Zapfenbuchse mit $D_{ak2} = D_{a\ neu}\ (1-0{,}0007)$ |
| $D_{i\ alt}$ | Innendurchmesser der bisherigen Lagerbuchse mit Lagermetallbeschichtung |
| $D_{i\ neu}$ | Innendurchmesser der neuen Lagerbuchse mit Lagermetallbeschichtung |
| $S_D$ | Dicken-Schwellenwert für Lagermetallschicht |

## Patentansprüche

**1.** Verfahren zum Aufbereiten einer Lageranordnung (100) für einen Walzenzapfen (210) einer Walze (200) zum Walzen von Walzgut, wobei die Lageranordnung ein Lagereinbaustück (110) mit einer Lagerbuchse (112) und eine in der Lagerbuchse mit Lagerspiel gelagerte und auf den Walzenzapfen (210) aufschiebbare Zapfenbuchse (120) umfasst; und
wobei das Verfahren **gekennzeichnet ist durch** folgende Schritte:

- Nacharbeiten der Zapfenbuchse (120) **durch** erstmaliges Verringern von deren Außendurchmesser Da unterhalb eines Schwellenwertes Dak, bei dessen Unterschreitung das Lagerspiel, welches dann zwischen dem Innendurchmesser Di alt der bisherigen Lagerbuchse (112) und dem unter den Schwellenwert verringerten Außendurchmesser der Zapfenbuchse (120) verbleiben würde, nicht mehr in einem zulässigen Wertebereich liegen würde; und

- Bereitstellen einer neuen Lagerbuchse (112'), welche mit ihrem Innendurchmesser Di neu derart an den verringerten Außendurchmesser der nachgearbeiteten Zapfenbuchse (120) angepasst ist, dass das Lagerspiel zwischen dem Innendurchmesser Di neu der neuen Lagerbuchse (112') und dem unter den Schwellenwert verringerten Außendurchmesser der nachgearbeiteten Zapfenbuchse (120) einen Wert in dem vorgegebenen zulässigen Wertebereich aufweist.

2. Verfahren nach Anspruch 1, **dadurch gekennzeichnet, dass** der vorgegebene zulässige Wertebereich für das Lagerspiel dem Wertebereich des Lagerspiels im ursprünglichen Neuzustand der Lageranordnung (100) entspricht.

3. Verfahren nach Anspruch 1 oder 2, **dadurch gekennzeichnet, dass** der zulässige Wertebereich für das Lagerspiel 0,3 - 1,5 ‰ des erstmalig unter den Schwellenwert Dak verringerten Außendurchmessers Da neu der Zapfenbuchse (120) beträgt.

4. Verfahren nach einem der vorangegangenen Ansprüche, **dadurch gekennzeichnet, dass** die neue Lagerbuchse (112') mit einem Stahlträgerring hergestellt wird, welcher dicker ist als bei der bisherigen Lagerbuchse (112) und mit einer Lagermetallschicht (113) auf der Innenseite ihrer Bohrung hergestellt wird, wobei die Lagermetallschicht der neuen Lagerbuchse (112') anfänglich in etwa dieselbe Dicke aufweist, wie die Lagermetallschicht der bisherigen Lagerbuchse (112) im Neuzustand.

5. Verfahren nach einem der vorangegangenen Ansprüche, **dadurch gekennzeichnet, dass** die Nacharbeitung der Zapfenbuchse folgende Schritte aufweist:

   - Nacharbeiten der Außenseite der Zapfenbuchse (120), wobei deren Außendurchmesser verringert wird; und falls erforderlich
   - Nacharbeiten der Zapfenbuchse (120) auf ihrer Innenseite, wobei ihr Innendurchmesser vergrößert wird; und falls erforderlich
   - Kürzen der Zapfenbuchse (120) an ihrer ballenseitigen Stirnseite in ihrer axialen Länge; und falls erforderlich
   - Reduzieren eines radial nach außen stehenden Bundes (122) an dem ballenfernen Ende der Zapfenbuchse (120) auf der der Lagerbuchse zugewandten Stirnseite des ringförmigen Bundes in seiner koaxialen Erstreckung.

6. Verfahren nach Anspruch 5, **dadurch gekennzeichnet, dass** die Nacharbeitung der Zapfenbuchse (120) auch bereits vor dem erstmaligen Verringern des Außendurchmessers auf einen Wert unterhalb des Schwellenwertes mindestens einmal stattgefunden hat.

7. Verfahren nach Anspruch 5, **dadurch gekennzeichnet, dass** die Zapfenbuchse (120) an ihrer ballenfernen Stirnseite in axialer Richtung verlängert wird, zum Beispiel durch Einschrumpfen eines Ringes (150) in die ballenferne Stirnseite.

8. Verfahren nach Anspruch 5, 6 oder 7, **dadurch gekennzeichnet, dass** die Nacharbeitung der Zapfenbuchse (120) auch nach dem erstmaligen Verringern des Außendurchmessers auf einen Wert unterhalb des Schwellenwertes noch mindestens einmal erfolgt

9. Verfahren nach einem der vorangegangenen Ansprüche, **dadurch gekennzeichnet, dass** nach dem Bereitstellen der neuen Lagerbuchse (112') - falls erforderlich - mindestens eine Reparatur der neuen Lagerbuchse erfolgt.

10. Verfahren nach Anspruch 9, **dadurch gekennzeichnet, dass** die Reparatur der neuen Lagerbuchse (112') folgende Schritte aufweist:

    - Abtragen der der Zapfenbuchse (120) zugewandten Lagermetallschicht, typischerweise aus Weißmetall, auf der Innenseite der neuen Lagerbuchse (112'), optional zusammen mit einer dünnen Schicht des der Zapfenbuchse abgewandten Trägermaterials (114) der Lagermetallschicht (113); und
    - Neuaufbau einer neuen Lagermetallschicht (113) mit einer solchen Schichtdicke, das der ursprüngliche Nenn-Innendurchmesser Di neu der neuen Lagerbuchse (112') wieder hergestellt wird.

11. Verfahren nach Anspruch 10, **dadurch gekennzeichnet, dass** die Schichtdicke der neu aufgebauten Lagermetallschicht (113) unterhalb eines Dicken-Schwellenwertes SD liegt.

12. Verfahren nach einem der vorangegangenen Ansprüche, **dadurch gekennzeichnet, dass** das Nacharbeiten, das Verringern des Außendurchmessers oder das Abtragen von Material, zum Beispiel durch Abschleifen, Abfräsen oder Abdrehen erfolgt.

**Claims**

1. Method of providing a bearing arrangement (100) for a roll pin (210) of a roll (200) for rolling rolling stock, wherein the bearing arrangement comprises a bearing chock (110) with a bearing bush (112) and a pin bush (120), which is mounted in the bearing bush with bearing play and which can be pushed onto the roll pin (210); and

    wherein the method is **characterised by** the following steps:

    - reworking the pin bush (12) by initial reduction of the external diameter Da thereof below a threshold value Dak at which, if fallen below, the bearing play which would then remain between the internal diameter Di_old of the previous bearing bush (112) and the external diameter of the bearing bush (120) reduced to below the threshold value would no longer lie in a permissible values range; and
    - providing a new bearing bush (112') so adapted by the internal diameter (Di_new) thereof to the reduced external diameter of the reworked pin bush (120) that the bearing play between the internal diameter Di_new of the new bearing bush (112') and the external diameter - reduced to below the threshold value - of the reworked pin bush (120) has a value in the predetermined permissible values range.

2. Method according to claim 1, **characterised in that** the predetermined permissible values range for the bearing play corresponds with the values range of the bearing play in the original new state of the bearing arrangement (100).

3. Method according to claim 1 or 2, **characterised in that** the permissible values range for the bearing play is 0.3 to 1.5% of the external diameter Da_new - initially reduced to below the threshold value Dak - of the pin bush (120).

4. Method according to any one of the preceding claims, **characterised in that** the new bearing bush (112') is produced by a steel carrier ring which is thicker than in the case of the previous bearing bush (112) and is made with a bearing metal layer (113) on the inner side of the bore thereof, wherein the bearing metal layer of the new bearing bush (112') at the outset has approximately the same thickness as the bearing metal layer of the previous bearing bush (112) in the new state.

5. Method according to any one of the preceding claims, **characterised in that** the reworking of the pin bush comprises the following steps:

    - reworking the outer side of the pin bush (120), wherein the external diameter thereof is reduced; and if necessary
    - reworking the pin bush (120) on the inner side thereof, wherein the internal diameter thereof is increased; and if necessary
    - shortening the pin bush (120) in its axial length at the end face thereof towards the roll body; and if necessary
    - reducing a radially outwardly protruding collar (122), which is at the end of the pin bush (120) remote from the roll body, in its coaxial length on the end face, which faces the bearing bush, of the annular collar.

6. Method according to claim 5, **characterised in that** the reworking of the pin bush (120) was already carried out at least once before the initial reduction of the external diameter to a value below the threshold value.

7. Method according to claim 5, **characterised in that** the pin bush (120) is prolonged in axial direction at its end face remote from the roll body, for example by shrink-fitting of a ring (150) in the end face remote from the roll body.

8. Method according to claim 5, 6 or 7, **characterised in that** the reworking of the pin bush (120) is carried out at least once again after the initial reduction of the external diameter to a value below the threshold value.

9. Method according to any one of the preceding claims, **characterised in that** at least one repair of the new bearing bush is carried out, if necessary, after provision of the new bearing bush (112').

10. Method according to claim 9, **characterised in that** the repair of the new bearing bush (112') comprises the following steps:

    - removing the bearing metal layer, which faces the pin bush (120) and is typically of white metal, on the inner side of the new bearing bush (112') optionally together with a thin layer of the carrier material (114), which is remote from the pin bush, of the bearing metal layer (113) and
    - reconstruction of a new bearing metal layer (113) with such a layer thickness that the original nominal internal diameter Di_new of the new bearing bush (112') is produced again.

11. Method according to claim 10, **characterised in that** the layer thickness of the recreated bearing metal layer (113) lies below a thickness threshold value SD.

**12.** Method according to any one of the preceding claims, **characterised in that** the reworking, the reduction of the external diameter or the removal of material is carried out by, for example, grinding, milling or turning.

**Revendications**

**1.** Procédé pour la préparation d'un agencement de palier (100) pour un tourillon de cylindre (210) d'un laminoir (200) pour le laminage d'un produit à laminer, dans lequel l'agencement de palier comprend une empoise de palier (110) comprenant un coussinet de palier (112) et une douille de tourillon (120) montée avec un jeu de palier dans la garniture de coussinet et apte à se déplacer sur le tourillon de cylindre (210), et
dans lequel le procédé se **caractérise par** les étapes ci-après consistant à :

- rattraper la douille de tourillon (120) par un premier rétrécissement de son diamètre externe Da en dessous d'une valeur seuil Dak, telle que, lorsqu'elle est dépassée vers le bas, le jeu de palier, qui subsisterait entre le diamètre interne Di ancien du coussinet de palier ancien (112) et le diamètre externe de la douille de tourillon (120) ayant subi une réduction à une valeur située en dessous de la valeur seuil, ne serait plus situé dans une plage de valeurs admissibles ; et
- procurer un nouveau coussinet de palier (112') qui, avec son diamètre interne Di nouveau, est adapté au diamètre externe réduit de la douille de tourillon rattrapée (120), de telle sorte que le jeu de palier entre le diamètre interne Di nouveau du nouveau coussinet de palier (112') et le diamètre externe réduit à une valeur située en dessous de la valeur seuil, de la douille de tourillon rattrapée (120), présente une valeur qui se situe dans la plage prédéfinie de valeurs admissibles.

**2.** Procédé selon la revendication 1, **caractérisé en ce que** la plage prédéfinie de valeurs admissibles pour le jeu de palier correspond à la plage de valeurs du jeu de palier à l'état nouveau d'origine de l'agencement de palier (100).

**3.** Procédé selon la revendication 1 ou 2, **caractérisé en ce que** la plage de valeurs admissibles pour le jeu de palier représente de 0,3 à 1,5 ‰ du diamètre externe Da nouveau de la douille de tourillon (120), soumis pour la première fois à une réduction pour prendre une valeur en dessous de la valeur seuil Dak.

**4.** Procédé selon l'une quelconque des revendications précédentes, **caractérisé en ce que** le nouveau coussinet de palier (112') est réalisée avec un anneau de support en acier qui est plus épais que dans le cas du coussinet de palier ancien (112) et est réalisée avec une couche de métal antifriction (113) sur le côté interne de son alésage, la couche de métal antifriction du nouveau coussinet de palier (112') présentant au départ approximativement la même épaisseur que celle de la couche de métal antifriction du coussinet de palier ancien (112) à l'état neuf.

**5.** Procédé selon l'une quelconque des revendications précédentes, **caractérisé en ce que** le rattrapage de la douille de tourillon présente les étapes suivantes consistant à :

- rattraper le côté externe de la douille de tourillon (120) en réduisant son diamètre externe ; et, en cas de nécessité
- rattraper la douille de tourillon (120) sur son côté interne, en augmentant son diamètre interne ; et, en cas de nécessité
- raccourcir la douille de tourillon (120) sur son côté frontal du côté du corps du cylindre, sur sa longueur axiale ; et, en cas de nécessité
- réduire un épaulement (122) faisant saillie en direction radiale vers l'extérieur à l'extrémité éloignée du corps de cylindre, de la douille de tourillon (120), sur le côté frontal tourné vers la garniture de coussinet, de l'épaulement annulaire, dans son étendue coaxiale.

**6.** Procédé selon la revendication 5, **caractérisé en ce que** le rattrapage de la douille de tourillon (120) a également déjà eu lieu au moins une fois avant la première réduction du diamètre externe à une valeur inférieure à la valeur seuil.

**7.** Procédé selon la revendication 5, **caractérisé en ce que** la douille de tourillon (120) est prolongée dans sa direction axiale sur son côté frontal éloigné du corps de cylindre, par exemple par rétrécissement d'un anneau (150) dans le côté frontal éloigné du corps de cylindre.

**8.** Procédé selon la revendication 5, 6 ou 7, **caractérisé en ce que** le rattrapage de la douille de tourillon (120) a également lieu encore au moins une fois après la première réduction du diamètre externe à une valeur inférieure à la valeur seuil.

**9.** Procédé selon l'une quelconque des revendications précédentes, **caractérisé en ce que**, après la procuration du nouveau coussinet de palier (112') - en cas de nécessité - on procède au moins à une réparation de la nouvelle garniture de coussinet.

**10.** Procédé selon la revendication 9, **caractérisé en ce**

**que** la réparation du nouveau coussinet de palier (112') présente les étapes suivantes consistant à :

- retirer la couche de métal antifriction constituée spécifiquement de métal blanc, tournée vers la douille de tourillon (120), sur le côté interne du nouveau coussinet de palier (112'), de manière facultative conjointement avec une mince couche de la matière de support (114) de la couche de métal antifriction (113), qui se détourne de la douille de tourillon ; et

- réarranger une nouvelle couche de métal antifriction (113) possédant une épaisseur de couche telle que l'on rétablit le diamètre interne de consigne d'origine Di nouveau du nouveau coussinet de palier (112').

11. Procédé selon la revendication 10, **caractérisé en ce que** l'épaisseur de couche de la couche de métal antifriction nouvellement réarrangée (113) est inférieur à une valeur d'épaisseur seuil SD.

12. Procédé selon l'une quelconque des revendications précédentes, **caractérisé en ce que** le rattrapage, la réduction du diamètre externe ou le retrait de matière a lieu par exemple par abrasion, par fraisage ou via un travail au tour.

FIG.1

FIG.2

FIG.3

FIG.4

FIG.5

FIG.6

**IN DER BESCHREIBUNG AUFGEFÜHRTE DOKUMENTE**

**In der Beschreibung aufgeführte Patentdokumente**

• EP 1151145 B1

**In der Beschreibung aufgeführte Nicht-Patentliteratur**

• **R.S. SCHRAMA.** Types of Failures of Backup Roll Assemblies. *Iron & Steel Technologies,* Dezember 2005